## Europäisches Patentamt
## European Patent Office
## Office européen des brevets

(19)

(11) Numéro de publication: **0 168 411**
**B1**

(12)
# FASCICULE DE BREVET EUROPÉEN

(45) Date de publication du fascicule du brevet:
08.03.89

(51) Int. Cl.⁴: **B 62 D 13/06**

(21) Numéro de dépôt: **85900043.2**

(22) Date de dépôt: **28.12.84**

(86) Numéro de dépôt international:
**PCT/CH 84/00202**

(87) Numéro de publication internationale:
**WO 85/03263 (01.08.85 Gazette 85/17)**

(54) **DISPOSITIF D'ASSERVISSEMENT DE LA DIRECTION D'UN VEHICLE ARTICULE.**

(30) Priorité: **19.01.84 CH 237/84**
**04.10.84 CH 4768/84**

(43) Date de publication de la demande:
**22.01.86 Bulletin 86/4**

(45) Mention de la délivrance du brevet:
**08.03.89 Bulletin 89/10**

(84) Etats contractants désignés:
**AT BE CH DE FR GB LI LU NL SE**

(56) Documents cité:
**BE-A-400 388**
**FR-A-734 241**
**GB-A-2 014 921**

(73) Titulaire: **GEORG FISCHER AKTIENGESELLSCHAFT, Mühlentalstrasse 105, CH- 8201 Schaffhausen (CH)**

(72) Inventeur: **Martinet, Simon, Fleurettes 11, CH- 1373 Chavornay (CH)**

(74) Mandataire: **Szilagyi, Marianne, c/o Georg Fischer Aktiengesellschaft Patentabteilung, CH- 8201 Schaffhausen (CH)**

## Description

La présente invention concerne un dispositif d'asservissement de la direction d'un véhicule articulé comportant un tracteur et au moins une remorque à roues à essieux fixes ou articulés, comportant au moins un organe pour détecter la position de l'axe de la remorque par rapport à l'axe du tracteur et un circuit électronique pour fournir à ce dispositif d'asservissement une succesion de signaux de commande de la direction des roues au tracteur, tel que connu par exemple de BE-A-400 388.

Les difficultés des manoeuvres en marche arrière d'un véhicule articulé, qu'il soit du type semi-remorque ou du type camion-remorque, sont bien connues des conducteurs.

Ces manoeuvres necessitent de la part de ces derniers une attention soutenue, car toute erreur d'appréciation les oblige à recommencer l'opération. En effet, pour faire reculer un véhicule semi-remorque vers la droite, il est necessaire, au début de la manoeuvre d'orienter les roues directrices du tracteur vers la gauche, par exemple en amorçant la marche arrière afin de positionner le tracteur par rapport à la remorque, de telle manière que leurs axes longitudinaux forment un angle saillant ouvert du côté vers lequel le véhicule doit tourner, c'est-à-dire vers la droite. Cette position relative étant atteinte, le conducteur doit redresser la direction de façon à orienter les roues directrices du tracteur vers la droite pour continuer à pousser la remorque en marche arrière dans cette direction. Une erreur de jugement, qui amène le conducteur à redresser trop tôt ou trop tard les roues directrices du véhicule tracteur, provoque une déviation erronée de la remorque et oblige le conducteur à recommencer la manoeuvre. Dans ce cas, il est en général obligé de faire avancer le véhicule pour ramener la remorque dans la bonne position angulaire par rapport au tracteur.

Si un conducteur chevronné est moins sujet à ce type d'erreur d'appreciation qu'un conducteur peu expérimenté, ces manoeuvres restent compliquées et nécessitent une concentration intense pour permettre au conducteur d'anticiper les réactions du véhicule en fonction de son action sur la direction.

Pour un véhicule du type camion-remorque où la remorque comporte des roues solidaires d'un essieu articulé attelé à un timon, les difficultés sont encore accrues du fait que la remorque est liée au tracteur par une double articulation. En effet, pour faire tourner le véhicule en marche arrière vers la droite, le conducteur doit tout d'abord braquer les roues directrices du tracteur vers la droite et amorcer la marche arrière dans cette position, afin de faire pivoter le timon vers la droite et d'orienter les roues de la remorque dans cette même direction. La phase suivante de la manoeuvre consiste à redresser les roues au tracteur vers la gauche, pour que le tracteur se place dans une position telle que son axe soit sensiblement disposé dans le prolongement du timon. Il convient ensuite de redresser les roues directrices du tracteur, en les orientant vers la droite de telle manière que le timon forme avec l'axe du tracteur d'une part et l'axe de la remorque d'autre part, deux angles inférieurs à 180 degrés ouverts vers la droite. Tant que la remorque garde cette position relative par rapport au tracteur, la manoeuvre de marche arrière s'effectue sans encombre. Toutefois, il est à noter que cette position d'équilibre est très instable, notamment à cause des inégalités de la route, de différences de pression ou d'usure de certaines roues etc..., et que le conducteur est obligé d'effectuer constamment des corrections pour éviter que la remorque se place en porte-à-faux par rapport au tracteur suite à un pivotement exagéré et incontrôlé du timon.

Certains véhicules de transport urbain, à double articulation, ont un comportement similaire à celui des camions-remorques. En raison des problèmes posés par les manoeuvres en marche arrière, les circuits urbains suivis par ces véhicules ont dû être sélectionnés de manière à éviter, dans la mesure du possible, toute manoeuvre en marche arrière. Même les aires de stationnement et les hangars de révision ont dû être conçus pour éviter aux chauffeurs les fastidieuses manoeuvres de marche arrière.

On connaît par le brevet français publié sous le No FR-A-734 241 un dispositif d'asservissement de la direction d'un véhicule articulé comportant un tracteur et une remorque à roues à essieux fixes, et un organe de commande pour donner une consigne de direction à ce dispositif. Ce dispositif connu comporte un premier détecteur pour détecter la position des roues directrices du tracteur, ledit premier détecteur étant constitué par le volant lui-même, un second détecteur pour détecter la position de la remorque relativement à l'axe du tracteur et un dispositif de commande de la direction des roues du tracteur agissant en fonction des informations fournies par le premier et le second détecteur de la consigne donnée par l'organe de commande.

Le brevet belge publié sous le No BE-A-400 388 décrit un dispositif d'asservissement de la direction d'un véhicule articulé comportant un tracteur et au moins une remorque à essieux fixes. Ce dispositif comprend un organe détecteur pour détecter la position de l'axe de la remorque par rapport à l'axe du tracteur et un circuit électrique pour fournir au dispositif d'asservissement une succession de signaux de commande de la direction des roues du tracteur.

Ces deux dispositifs connus sont en fait conçus pour rattraper le "deraillage" de la remorque.

La présente invention se propose donc de pallier les inconvénients susmentionnés, en fournissant au conducteur un dispositif d'asservissement lui permettant d'effectuer les manoeuvres en marche arrière aussi simplement que les déplacements en marche avant.

Dans ce but, le dispositif d'asservissement tel que défini ci-dessus, est caractérisé en ce qu'il comporte également un organe de commande, mécaniquement découplé de la direction du tracteur, pour définir une consigne de direction correspondant à une trajectoire à suivre par le véhicule, en particulier en marche arrière, et un détecteur pour détecter la position des roues directrices du tracteur, lesdits signaux de commande étant fonction d'une part de la consigne de direction, et d'autre part des positions relatives instantanées des roues directrices du tracteur et de la remorque par rapport au tracteur, ces positions relatives étant définies par lesdits organes detecteurs, et ces signaux de commande étant destinés à orienter les roues directrices du tracteur dans le but de déplacer le véhicule selon ladite trajectoire definie par la consigne de direction.

Le circuit électronique est conçu pour analyser à chaque instant les positions angulaires des differents éléments mobiles (tracteur, remorque et éventuellement timon) et corriger l'orientation des roues du tracteur pour que les valeurs angulaires mesurées par les détecteurs et analysées par un dispositif électronique, correspondent aux valeurs fixées par la consigne.

Dans la pratique, on définit la consigne de direction à l'aide d'un organe de commande pouvant par exemple être constitué par un levier ou un volant de manoeuvre en marche arrière ou en marche avant à faible vitesse. Le conducteur fournit la consigne en manipulant le levier ou le volant dans la direction qu'il veut faire suivre à son véhicule, c'est-à-dire à droite s'il veut tourner à droite, à gauche s'il veut tourner à gauche. En marche avant, à faible vitesse, cet organe de commande agit d'une manière strictement équivalente à celle du volant traditionnel. Par contre, en marche arrière, cet organe commande la direction du tracteur d'une manière intelligente, c'est-à-dire qu'il provoque l'orientation adéquate des roues du tracteur pour faire suivre au véhicule la direction choisie, et qu'il apporte à chaque instant, automatiquement les corrections nécessaires, ce qui permet d'éviter au conducteur tout effort d'appréciation et toute intervention refléchie.

En conséquence, ce dispositif présente l'avantage de mettre à la portée de n'importe quel individu même inexpérimenté en la matière, la manoeuvre en marche arrière d'un véhicule à simple articulation ou à articulations multiples. L'autre part, du fait que la manoeuvre de ce type de véhicule est facilitée, on peut envisager de concevoir des locaux de dimensions plus réduites pour garer et réviser ies véhicules articulés pour les transports urbains.

La présente invention sera mieux comprise en référence à la description d'exemples de réalisation et du dessin annexé dans lequel:

La fig. 1 représente une vue schématique d'un véhicule du type semi-remorque équipé du dispositif selon l'invention,

La fig. 2 représente une vue schématique d'un véhicule du type camion-remorque également equipe du dispositif d'asservissement selon l'invention,

La fig. 3 représente une vue schématique d'un véhicule semi-remorque auquel est attelée une remorque,

Les figures 4A, 4B et 4C illustrent les différentes phases des manoeuvres nécessaires pour faire reculer un véhicule du type semi-remorque vers la droite,

Les figures 5A, 5B, 5C et 5D illustrent les différentes phases d'une manoeuvre en marche arrière avec virage à droite d'un véhicule du type camion-remorque,

La fig. 6 représente schématiquement les moyens hydrauliques permettant de réaliser d'une manière simple le dispositif d'asservissement selon l'invention,

La fig. 7 représente le schéma hydraulique d'une forme de réalisation particulière du dispositif d'asservissement selon l'invention,

La fig. 8 représente un boîtier de direction équipé du système d'asservissement selon l'invention, et

La fig. 9 représente une vue de détail en coupe verticale d'un détecteur du type rhéostat monté, par exemple, sur la sellette du tracteur d'un véhicule semi-remorque.

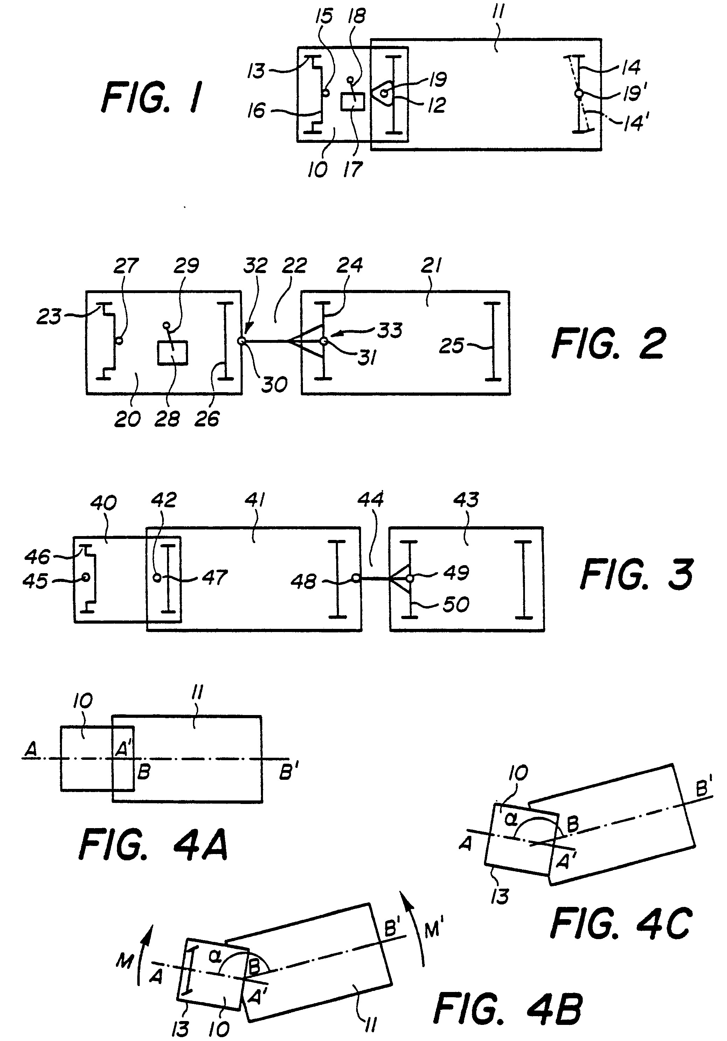

Le véhicule semi-remorque représenté par la fig. 1 comporte un tracteur 10 et une remorque 11 attelée au tracteur 10 par l'intermédiaire d'une sellette 12 qui définit le point d'articulation entre le tracteur et la remorque. D'une façon connue en soi, les roues antérieures 13 du tracteur 10 sont directrices et l'essieu 14 de la remorque 11 est fixe. Dans ce cas, le dispositif d'asservissement comporte avantageusement un premier détecteur 15 lié aux roues 13 ou au mécanisme de direction, schématiquement représenté par la tringlerie 16, ce détecteur étant agencé pour fournir au circuit électronique, schématiquement représenté par un boîtier 17, un signal lié à la position réelle des roues 13. Ce boîtier électronique 17 peut être équipé d'un organe de commande, par exemple d'un levier 18 pivotant, destiné à donner une consigne de direction au circuit électronique. Un deuxième détecteur 19 est, dans ce cas, lié à la sellette 12 pour fournir au circuit électronique une information concernant la position relative du tracteur 10 et de la remorque 11. Dans la pratique, l'information transmise définit l'angle que forment entre eux les axes longitudinaux du tracteur et de la remorque.

Dans certains cas, l'essieu 14 de la remorque 11 peut être auto-dirigé. Dans ces cas, cet essieu peut pivoter autour d'un axe grace à un mécanisme qui le lie à la sellette. Dans ces cas également, puisque le pivotement de l'essieu 14 est sensiblement proportionnel au pivotement de la remorque par rapport au tracteur, tel qu'il peut être détecté sur la sellette 12, le second détecteur 19 pourrait occuper une position 19' dans laquelle il serait lié à l'essieu auto-dirigé 14'.

La fig. 2 représente un autre véhicule du type camion-remorque comportant un camion 20 et une remorque 21 attelée au camion par un timon 22. Dans le cas le plus courant, les roues antérieures 23 du camion 20 sont directrices et l'essieu antérieur 24 de la remorque 21 est pivotant et solidaire du timon 22. L'essieu arrière 25 de la remorque ainsi que l'essieu arrière 26 du camion 20 sont fixes. Toutefois, il existe des camions sur lesquels l'essieu arrière n'est pas fixe et des remorques dont l'essieu arrière est mobile, lié mécaniquement à l'essieu avant. Comme précédemment, le dispositif d'asservissement comporte un premier détecteur 27 lié aux roues directrices 23 du camion ou à son mécanisme de direction, et un circuit électronique 28 éventuellement équipe d'un organe de commande tel qu'un levier ou un volant 29. Dans cette réalisation, les points de liaison 30 entre le timon 22 et le camion 20 définissent une première articulation et l'axe de pivotement 31 de l'essieu 24 de la remorque 21 définit une seconde articulation. Pour connaître à tout moment les positions relatives des composants du véhicule, il est indispensable de connaître d'une part, la position relative du timon 22 et du camion 20 et d'autre part la position relative du timon 22, ou de l'essieu 24 solidaire de ce timon et de la remorque 21. A cet effet, le dispositif d'asservissement comporte un second détecteur 32 lié au point 30 et un troisième détecteur 33 monté sur l'axe 31. Le détecteur 27 est conçu pour transmettre au circuit électronique 28 un signal correspondant à la position effective des roues 23. Le détecteur 32 est agencé pour transmettre au circuit électronique 28 une information concernant l'angle formé par le timon 22 et à l'axe du camion 20. Le détecteur 33 est conçu pour transmettre au circuit électronique 28 une information relative à l'angle que forme le timon 22 avec l'axe longitudinal de la remorque 21. Le circuit électronique 28 est conçu pour traiter ces informations, les comparer à une consigne donnée par exemple au moyen de l'organe de commande 29 et pour fournir un signal de commande agissant par l'intermédiaire d'un circuit hydraulique d'assistance, sur la direction du camion 20.

Les deux réalisations ci-dessus montrent que le nombre de détecteurs nécessaires pour transmettre les informations au circuit électronique est lié au nombre d'articulations servant à accoupler les composants du véhicule. La fig. 3 illustre une généralisation du système adapté à un véhicule comportant un tracteur 40, une première remorque 41 attelée au tracteur 40 au moyen d'une sellette 42 et une seconde remorque 43 attelée à la remorque 41 au moyen d'un timon 44. Le dispositif d'asservissement comporte avantageusement dans ce cas un premier détecteur 45 lié aux roues directrices 46 du tracteur 40, un second détecteur 47 lié à la sellette 42, un troisième détecteur 48 accouplé au point d'articulation du timon 44 et un quatrième détecteur 49 lié au point de pivotement de l'essieu dirigé 50 de la remorque 43. Dans la version la plus simple, le nombre de détecteurs est directement lié au nombre d'articulations. Toutefois, dans des versions plus sophistiquées, des détecteurs supplémentaires pourraient être montés pour fournir d'autres informations telles que par exemple le déport latéral de la remorque dans le virage, l'inclinaison du véhicule etc... En outre, la nature des détecteurs peut être quelconque. Une forme de réalisation avantageuse utilise des détecteurs du type rhéostat. Toutefois, ils pourraient être remplacés par des capteurs magnétiques, des capteurs optiques ou tout autre dispositif approprié.

Les figures 4A-C illustrent les différentes phases d'une manoeuvre devant être effectuée pour faire reculer vers la droite un véhicule du type semi-remorque tel que représenté par la fig. 1. Le véhicule se trouve initialement en position droite, c'est-à-dire l'axe A-A' se trouve dans le prolongement de l'axe B-B' de la remorque 11. Au cours d'une première phase de la manoeuvre illustrée par la fig. 4B, les roues directrices 13 du tracteur 10 sont tournées vers la gauche pour faire pivoter l'avant du tracteur dans le sens de la flèche M, ce qui entraîne un pivotement de l'arrière de la remorque dans le sens de la flèche M'. Les deux axes A-A' et B-B' forment un angle inférieur à 180 degrés ouvert vers la droite, c'est-à-dire du côté vers lequel le véhicule doit tourner. La phase suivante illustrée par la fig. 4C consiste à ramener les roues directrices 13 du tracteur vers la droite et à reculer le véhicule en maintenant l'angle inférieur à 180 degrés. Tant que cette position relative des deux axes A-A' et B-B' est maintenue, le véhicule continuera à tourner vers la droite. Le dispositif d'asservissement est conçu pour commander ces différentes phases de la manoeuvre et pour corriger la trajectoire du véhicule en fonction de la consigne donnée au circuit électronique. Cette consigne correspond en fait à l'angle $\alpha$ dont le conducteur estime la valeur pour que le véhicule suive la trajectoire souhaitée.

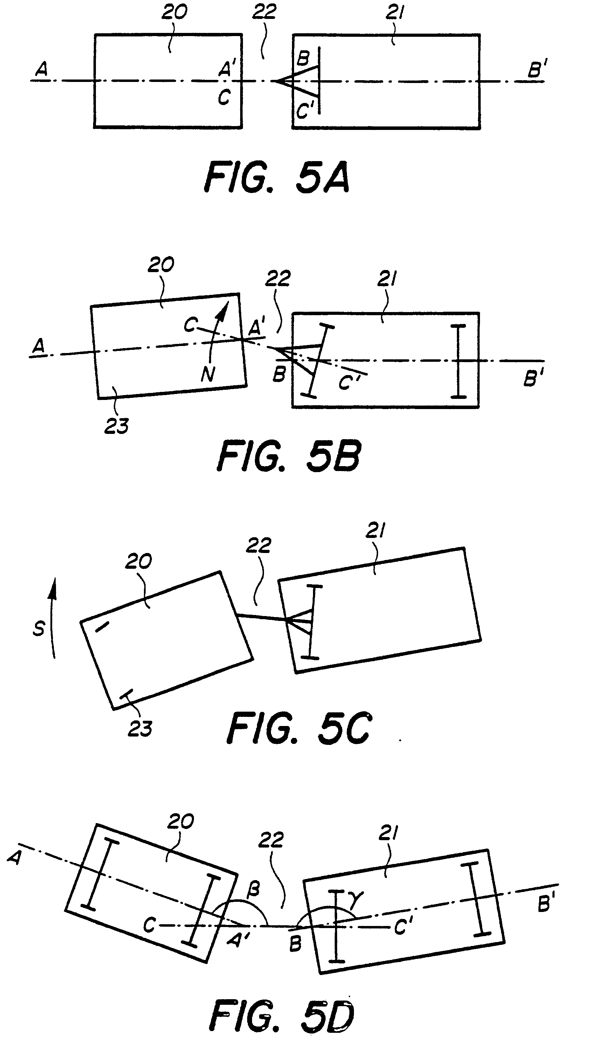

Les figures 5A à C illustrent les différents phases de la manoeuvre en marche arrière et en virage à droite d'un véhicule du type camion-remorque tel qu'illustré par la fig. 2. Comme le montre la fig. 5A, le camion 20 et la remorque 21 se trouvent dans une position telle que l'axe A-A' du camion 20, l'axe B-B' de la remorque 21 et l'axe C-C' du timon 22 soient dans le prolongement l'un des autres. Cette position initiale n'est toutefois pas indispensable et le dispositif d'asservissement pourrait également opérer si le camion et la remorque occupaient des positions relatives différentes. En partant de la position illustrée par la fig. 5A, la première phase de la manoeuvre consiste à orienter les roues directrices 23 du camion 20 vers la droite et à amorcer la marche arrière de manière à faire pivoter le timon 22 et l'essieu 24 solidaire de ce timon dans le sens de la flèche N. Dans cette position, les trois axes ont une disposition relative en forme de Z. L'orientation de la remorque 21 étant adaptée à un virage vers la droite, il convient maintenant de rétablir la position du camion 20, ce qui sera effectué au cours de la phase suivante illustrée par la fig. 5C. Cette phase consiste à redresser vers la gauche les roues directrices 23 du camion 20 de manière à provoquer un pivotement de l'avant du camion dans le sens de la flèche 5, tout en maintenant sensiblement les positions relatives du timon 22 et de la remorque 21. La dernière phase illustrée par la fig. 5D illustre la position définitive du camion 20 et de la remorque 21 permettant un recul de la remorque vers la droite. Dans cette position l'axe A-A' du camion 20 forme avec l'axe C-C' du timon 22 un angle $\beta$ inférieur à 180 degrés. De même, l'axe B-B' de la remorque 21 forme avec l'axe C-C' du timon 22 un angle $\gamma$ inférieur à 180 degrés. Tant que ces conditions restent maintenues, le véhicule continue à reculer en tournant vers la droite. Dès que l'un de ces deux angles atteindra ou dépassera 180 degrés, la remorque aura tendance à se mettre en porte-à-faux par rapport au camion. Le dispositif électronique est par conséquent conçu pour corriger la direction du camion 20 de telle manière que les angles $\beta$ et $\gamma$ restent toujours inférieurs à 180 degrés et que la somme de ces angles soit constamment égale à une valeur angulaire définie par la consigne donnée au circuit électronique par l'organe de commande.

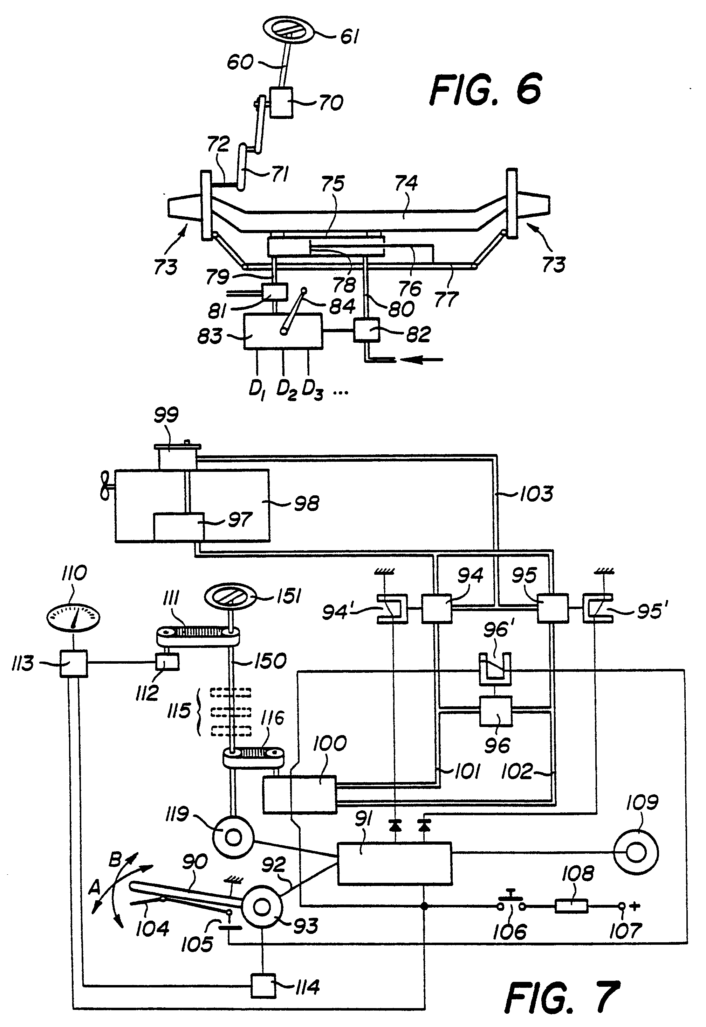

La fig. 6 illustre une forme de réalisation particulière du circuit hydraulique pouvant être adapté aisément à tout véhicule existant. La colonne de direction 60 portant le volant 61, connecté au boîtier de direction 70, agit par l'intermédiaire d'une biellette 71 sur les fusées 72 des roues 73 portées par un essieu 74. Sur l'essieu 74 est monté un vérin hydraulique 75 dont la tige de piston est fixée à une timonerie 77 pouvant agir sur l'orientation des roues directrices 73. Chacune des deux chambres délimitées de part et d'autre du piston 78 du vérin hydraulique 75 est connectée respectivement par l'intermédiaire d'un conduit 79 et d'une vanne 81 et d'un conduit 80 et d'une vanne 82 à une source (non représentée) de fluide sous pression.

Le circuit électronique 83 équipé d'un levier 84 destiné à fournir la consigne, commande les vannes 81 et 82 en fonction des signaux transmis par des détecteurs $D_1$, $D_2$, $D_3$, etc... et de la consigne liée à la position du levier 84.

Ce montage hydraulique très simple s'adapte à tous les véhicules existants. En conduite normale, le vérin hydraulique est court-circuité, c'est-à-dire que l'huile hydraulique peut circuler librement d'une chambre à l'autre.

La variante illustrée par la fig. 7 est la plus complète et permet un contrôle efficace du fonctionnement de l'ensemble des organes.

L'organe de commande permettant de donner la consigne est constitué par un levier 90 susceptible d'être basculé vers la droite ou la gauche comme le montre la double flèche A ou vers le haut et le bas comme le montre la double flèche B. Ce levier permet de commander les roues directrices du tracteur pour toutes les opérations de manoeuvre comportant à la fois des déplacements en marche avant et des déplacements en marche arrière.

Le dispositif d'asservissement comporte essentiellement un boîtier électronique 91 qui est raccordé par une liaison électrique représentée par la ligne 92 à un détecteur 93 dont le rôle sera défini par la suite. Il se compose également de trois vannes 94, 95 et 96, respectivement commandées par des électro-aimants 94', 95' et 96'. Ces trois vannes électromagnétiques 94, 95 et 96 sont incluses dans un circuit hydraulique comportant une pompe hydraulique 97 entraînée par le moteur 98 du tracteur, un réservoir à huile hydraulique 99 et un moteur hydraulique 100 couplé par un mécanisme de liaison 116 à la colonne de direction 150 portant le volant 151.

En circulation routière marche avant, le pilote agit directement ou soit par l'intermédiaire d'un circuit d'assistance hydraulique sur les roues directrices du tracteur par le volant 151. La rotation de la colonne de direction 150 engendre une circulation d'huile hydraulique à travers le moteur hydraulique 100, la vanne électromagnétique 96 qui se trouve en position ouverte et les conduits 101 et 102 reliant le moteur hydraulique 100 à cette vanne 96. Par contre, les vannes 94 et 95, qui sont des vannes à trois voies, sont fermées dans le sens du passage vers le moteur hydraulique 100, mais ouvertes dans le sens du passage vers le conduit de retour 103 en direction du réservoir 99 pour permettre la libre circulation de l'huile mise sous pression par la pompe 97. De cette manière, le véhicule se conduit normalement et ne subit aucune perturbation due à l'existence du dispositif d'asservissement.

Pour effectuer des manoeuvre en marche avant à faible vitesse ou en marche arrière, le pilote abandonne le volant 151 et agit exclusivement sur le levier 90. Ce levier est équipé d'une manette 104 conçue pour fermer un interrupteur 105 qui permet de mettre le boîtier électronique 91 sous tension, ainsi que tous les organes électriques ou électroniques annexes, lorsque le contacteur général de mise en oeuvre 106, relié à la source 107 par l'intermédiaire d'un fusible 108, a été préalablement enclenché. Lorsque le levier est amené par le pilote dans l'une des deux positions illustrées par la flèche B, par exemple en position basse, le circuit électronique contenu dans le boîtier 91 commande la fermeture de la vanne 96 et l'ouverture ou la fermeture de l'une ou l'autre des voies des vannes à trois voies 94 et 95 en fonction du déplacement latéral du levier 90 selon la flèche A. La pompe hydraulique 97 injecte du fluide hydraulique dans le circuit du moteur hydraulique 100 qui agit de manière appropriée dans la colonne de direction.

Pour les manoeuvres de marche arrière, le levier 90 est amené dans sa position haute, ce qui à pour effet, dans un premier temps, d'inverser l'ouverture et la fermeture des voies de la soupape 94 et 95, et de provoquer, par l'intermédiaire du moteur hydraulique 100, une rotation vers la droite du volant 151 lorsque le

levier est basculé latéralement vers la gauche et une rotation de ce volant vers la gauche lorsque le levier 90 est basculé latéralement vers la droite.

Au moins un détecteur 109, par exemple lié à la sellette d'un véhicule du type semi-remorque fournit au circuit électronique 91 l'information relative à la position relative instantanée du tracteur et de la remorque et un détecteur 119 lui fournit une indication de la position des roues avant du tracteur.

Le tableau de bord du véhicule peut également être équipé d'un écran 110 de visualisation de la position des roues directrices du tracteur pour éviter au pilote d'effectuer des fausses manoeuvres. A cet effet, un mécanisme de couplage 111, lié à la colonne de direction 10, entraîne un capteur 112 connecté à un boîtier électronique 113, dont le rôle consiste à fournir un signal de commande à un moteur électrique 114 susceptible d'amener au début de la manoeuvre, le levier 90 dans une position correspondant à la déviation angulaire des roues directrices du tracteur. Cette synchronisation électromécanique peut également être effectuée par une fonction supplémentaire du boîtier électronique 91. Cette fonction peut être accomplie par une opération de "balayage" du levier de gauche à droite ou de droite à gauche, telle que l'enclenchement effectif du dispositif d'asservissement n'ait lieu qu'au moment où le levier passe par la position correspondant à la position effective occupée par les roues directrices du tracteur.

Le dispositif représenté schématiquement par la référence 115 est un dispositif d'accouplement et de désaccouplement des deux parties d'une colonne de direction réalisée en deux tronçons séparés qui permettraient, selon une autre forme de réalisation, de donner la consigne directement par le volant 151 et le capteur 112 pendant la manoeuvre et de supprimer le levier 90 et le détecteur 93 qui lui est associé.

L'organe de commande du dispositif d'asservissement, composé soit par un volant monté sur un axe fixe ou pivotant entre deux positions associées respectivement aux opérations de manoeuvre en marche avant et en marche arrière ou par un levier pouvant basculer entre deux positions latérales extrêmes ou encore par un levier pouvant adopter une position basse et une position haute et, dans chacune de ces deux positions, se déplacer latéralement entre deux positions extrêmes, est de préférence placé à côté du siège du pilote. Toutefois, toute autre disposition pourrait être étudiée en fonction des besoins spécifiques.

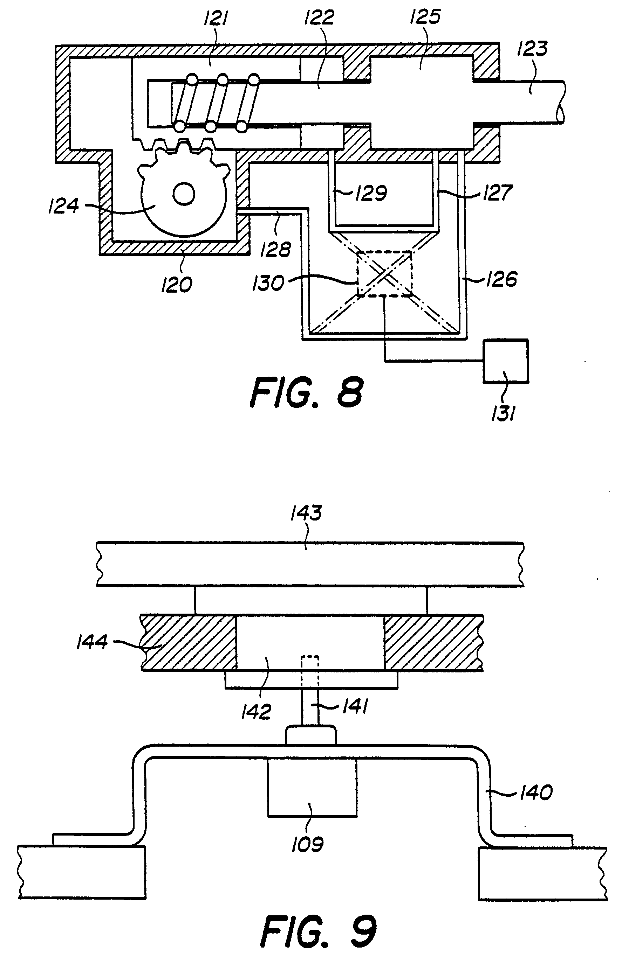

Le dispositif décrit ci-dessus pourrait également être adapté d'une manière relativement simple sur une direction hydraulique à écrous à billes telle que fabriquée par la société "Zahnradfabrik Friedrischafen AG" et commercialisée sous la désignation type 8052. Une telle direction hydraulique, représentée par la fig. 8, comporte essentiellement un boîtier 120 dans lequel est logé un piston 121, à l'intérieur duquel est engagé l'écrou à billes 122 prolongeant la colonne de direction 123, l'axe de biellette de direction 124 qui s'engrène avec le piston 121 et un distributeur de fluide hydraulique 125. Pour effectuer l'adaptation mentionnée ci-dessus, il suffit de connecter, entre les conduits de sortie 126 et 127 du distributeur et les conduits d'entrée 128 et 129 débouchant dans les chambres du boîtier de direction de part et d'autre du piston 121, une vanne de permutation des circuits d'alimentation schématiquement représentée par la référence 130, cette vanne étant commandée par le circuit électronique 131.

La fig. 9 représente une vue en coupe illustrant la disposition du détecteur 105 illustré par la fig. 7. Ce détecteur est par exemple constitué par un rhéostat ou par tout autre dispositif approprié monté à la base d'un étrier 140, solidaire de la sellette du châssis du tracteur et portant une tige rigide 141 qui est engagée dans un alésage axial approprié du pivot 142 solidaire du châssis 143 de la remorque. La tige 141 est mobile axialement, sollicitée par un ressort ou couplée au détecteur par une liaison souple. Elle est couplée au pivot par l'intermédiaire de cannelures ou d'un clavetage pour assurer, au capteur 109, la transmission de tous les déplacements en rotation subis par le pivot 142 maintenu par des mâchoires 144 par rapport au châssis du tracteur.

Il est bien entendu possible de recourir à d'autres solutions pour détecter la position relative du tracteur et de la remorque, et de transmettre un signal approprié au circuit électronique 91 mentionné en référence à la fig. 7.

**Revendications**

1. Dispositif d'asservissement de la direction d'un véhicule articulé comportant un tracteur et au moins une remorque à roues à essieux fixes ou articulés, comportant au moins un organe détecteur (19; 32, 33; 47 - 49) pour détecter la position de l'axe de la remorque par rapport à l'axe du tracteur et un circuit électronique (17; 28) pour fournir à ce dispositif d'asservissement une succession de signaux de commande de la direction des roues du tracteur, caractérisé en ce qu'il comporte également un organe de commande (18; 29) mécaniquement découplé de la direction du tracteur, pour définir une consigne de direction correspondant à une consigne à suivre par le véhicule, en particulier en marche arrière, et un organe détecteur (15; 27; 45) pour détecter la position des roues directrices (13; 23; 46) du tracteur, lesdits signaux de commande étant fonction d'une part de la consigne de direction, et d'autre part des positions relatives instantanées des roues directrices (13; 23; 46) du tracteur et de la remorque par rapport au tracteur, ces positions relatives étant définies par lesdits organes détecteurs (15, 19; 27, 32, 33; 45, 47 - 49), et ces signaux de commande étant destinés à orienter les roues directrices du tracteur dans le but de déplacer le véhicule selon ladite trajectoire définie par la consigne de direction.

2. Dispositif selon la revendication 1, caractérisé en ce que l'organe de commande pour donner une consigne de direction est constitué par un élément pivotant (90) réglable en position monté dans la cabine du pilote.

3. Dispositif selon la revendication 1, caractérisé en ce que l'organe de commande pour donner une consigne est constitué par le volant (151) du tracteur, ce volant étant débrayable (115) par rapport au boîtier de la direction.

4. Dispositif selon la revendication 1 dans lequel le véhicule articulé est du type semi-remorque comportant un tracteur (10) et une remorque (11), cette remorque (11) étant attelée au tracteur par une sellette (12), caractérisé en ce que l'organe détecteur (19) pour détecter la position de l'axe de la remorque par rapport à l'axe du tracteur est lié à la sellette (12).

5. Dispositif selon la revendication 4, dans lequel la remorque comporte un essieu auto-dirigé (14'), caractérisé en ce que l'organe (19') pour détecter la position de l'axe de la remorque par rapport à l'axe du tracteur est lié à l'essieu auto-dirigé (14').

6. Dispositif selon la revendication 1, dans lequel le véhicule articulé est du type camion-remorque, comportant un tracteur (20) et une remorque (21) à au moins un essieu articulé (24) solidaire d'un timon (22) pivotant attelé au tracteur, caractérisé en ce qu'il comporte un organe détecteur (32) pour détecter la position de l'axe de la remorque par rapport à l'axe du tracteur agencé pour déterminer l'angle de l'axe du timon par rapport à l'axe du tracteur et un organe détecteur (33) agencé pour déterminer l'angle de l'axe du timon par rapport à l'axe de la remorque.

7. Dispositif selon la revendication 6, caractérisé en ce que l'organe détecteur (32) pour détecter la position de l'axe de la remorque par rapport à l'axe du tracteur est lié au timon (22), et en ce que l'organe détecteur (33) agencé pour déterminer l'angle de l'axe du timon par rapport à l'axe de la remorque est lié à l'essieu articulé (34) de la remorque.

8. Dispositif selon la revendication 1, caractérisé en ce qu'il comporte un circuit hydraulique agence pour agir sur les roues directrices (13; 23; 46) du tracteur en réponse au signal de commande transmis par le circuit électronique.

9. Dispositif selon la revendication 8, caractérisé en ce que le circuit hydraulique comporte des vannes électromagnétiques (94, 95, 96) commandées par le circuit électronique, ces vannes étant agencées pour alimenter en fluide hydraulique dans un sens ou dans l'autre, selon le signal reçu du circuit électronique, un organe hydraulique (100) agencé pour actionner les roues directrices du tracteur.

**Patentansprüche**

1. Steuereinrichtung für die Lenkung eines Gelenkfahrzeuges, das ein Zugfahrzeug und mindestens einen Anhänger mit Rädern mit feststehenden oder gelenkig gelagerten Achsen umfaßt, die mindestens ein Detektororgan (19; 32, 33; 47 - 49) zur Erfassung der Stellung der Achse des Anhängers im Verhältnis zur Achse des Zugfahrzeuges und einen elektronischen Schaltkreis (17; 28) umfaßt, um an diese Steuereinrichtung eine Folge von Steuersignalen für die Lenkung der Räder des Zugfahrzeuges zu liefern, dadurch gekennzeichnet, daß sie auch ein mechanisch von der Lenkung des Zugfahrzeuges losgekuppeltes Steuerorgan (18; 29) umfaßt, um eine Lenkanweisung, die einem vom Fahrzeug insbesondere in Rückwärtsfahrt zu folgenden Weg entspricht, zu definieren, und ein Detektororgan (15; 27; 45) umfaßt, um die Stellung der Lenkräder (13; 23; 46) des Zugfahrzeuges zu erfassen, wobei die genannten Steuersignale einerseits von der Lenkanweisung und andererseits von den monentanen Relativstellungen der Lenkräder (13; 23, 46) des Zugfahrzeuges und des Anhängers zum Zugfahrzeug abhängen, wobei diese Relativstellungen durch die genannten Detektororgane (15, 19; 27, 32, 33; 45 - 49) bestimmt sind und diese Steuersignale dazu bestimmt sind, die Lenkräder des Zugfahrzeuges mit dem Ziel auszurichten, das Fahrzeug gemäß dem genannten, durch die Lenkanweisung definierten Weg fortzubewegen.

2. Einrichtung nach Anspruch 1, dadurch gekennzeichnet, daß das Steuerorgan zur Abgabe der Lenkanweisung durch ein schwenkbar gelagerten Element (90) gebildet ist, das in der Stellung einstellbar und im Fahrerhaus angebracht ist.

3. Einrichtung nach Anspruch 1, dadurch gekennzeichnet, daß das Steuerorgan zur Abgabe der Lenkanweisung durch das Lenkrad (151) des Zugfahrzeuges gebildet ist, wobei dieses Lenkrad vom Lenkgehäuse loskuppelbar (115) ist.

4. Einrichtung nach Anspruch 1, bei der das Gelenkfahrzeug vom Typ Sattelschlepper ist, der ein Zugfahrzeug (10) und einen Anhänger (11) umfaßt, wobei dieser Anhänger (11) am Zugfahrzeug über ein Sattelauflager (12) angehängt ist, dadurch gekennzeichnet, daß das Detektororgan (19) zur Erfassung der Stellung der Achse des Anhängers im Verhältnis zur Achse des Zugfahrzeuges mit dem Sattelauflager (12) verbunden ist.

5. Einrichtung nach Anspruch 4, bei der der Anhänger eine selbstgelenkte Achse (14') umfaßt, dadurch gekennzeichnet, daß das Organ (19') zur Erfassung der Stellung der Achse des Anhängers im Verhältnis zur Achse des Zugfahrzeuges mit der selbstgelenkten Achse (14') verbunden ist.

6. Einrichtung nach Anspruch 1, bei der das Gelenkfahrzeug vom Typ Lastkraftwagen-Anhänger ist, welches ein Zugfahrzeug (20) und einen Anhänger (21) mit mindestens einer Gelenkachse (24) umfaßt, die fest mit einer schwenkbar am Zugfahrzeug angehängten Deichsel verbunden ist, dadurch gekennzeichnet, daß sie ein Detektororgan (32) zur Erfassung der Stellung der Achse des Anhängers im Verhältnis zur Achse des Zugfahrzeuges umfaßt, welches eingerichtet ist, um den Winkel der Achse des Anhängers im Verhältnis zur Achse des Zugfahrzeuges zu bestimmen, und ein Detektororgan (33) umfaßt, welches eingerichtet ist, um den Winkel der Achse der Deichsel im Verhältnis zur Achse des Anhängers zu bestimmen.

7. Einrichtung nach Anspruch 6, dadurch gekennzeichnet, daß das Detektororgan (32) zur Erfassung der Stellung der Achse des Anhängers im Verhältnis zur Achse des Zugfahrzeuges mit der Deichsel (22) verbunden ist und daß das Detektororgan (33), das eingerichtet ist, um den Winkel der Achse der Deichsel im Verhältnis zur Achse des Anhängers zu bestimmen, mit der Gelenkachse (34) des Anhängers verbunden ist.

8. Einrichtung nach Anspruch 1, dadurch gekennzeichnet, daß sie einen Hydraulikkreis umfaßt, der eingerichtet ist, um reagierend auf das durch den elektronischen Schaltkreis übermittelte Steuersignal auf die Lenkräder (13; 23; 46) des Zugfahrzeuges zu wirken.

9. Einrichtung nach Anspruch 8, dadurch gekennzeichnet, daß der Hydraulikkreis elektromagnetische Ventile (94, 95, 96) umfaßt, die durch den elektronischen Schaltkreis gesteuert sind, wobei diese Ventile eingerichtet sind, um ein hydraulisches Organ (100), das eingerichtet ist, um die Lenkräder des Zugfahrzeuges zu betätigen, mit Hydraulikfluid in der einen oder anderen Richtung zu speisen.

**Claims**

1. Device for controlling the direction of an articulated vehicle comprising a tractor and at least one trailer having wheels with fixed or articulated axles, comprising at least one detector member (19, 32, 33, 47 - 49) for detecting the position of the axis of the trailer with respect to the axis of the tractor and an electronic circuit (17, 28) for supplying said control device with a succession of signals controlling the direction of the tractor wheels, characterized in that it also comprises a control member (18, 29) mechanically decoupled from direction of the tractor, in order to define a direction order corresponding to a path to be followed by the vehicle, particular in reverse, and a detector (15, 27, 45) for detecting the position of the driving wheels (13, 23, 46) of the tractor, said control signals being a function on the one hand of the direction order and on the other of instantaneous relative positions of the driving wheels (13, 23, 46) of the tractor and the trailer with respect to the tractor, said relative positions being defined by said detector members (15, 19, 27, 32, 33, 45, 47 - 49) and said control signals serve to orient the driving wheels of the tractor with a view to moving the vehicle in accordance with the path defined by the direction order.

2. Device according to claim 1, characterized in that the control member for providing a steering instruction or order is constituted by a pivoting member (90), which is regulatable in position and mounted in the driving cab.

3. Device according to claim 1, characterized in that the control member for giving an instruction is constituted by the steering wheel (151) of the tractor, said steering wheel being disconnectable (115) from the gearbox.

4. Device according to claim 1 in which the articulated vehicle is of the semi-trailer type having a tractor (10) and a trailer (11), the latter being coupled to the tractor by a bedplate (12), characterized in that the detector member (19) for detecting the position of the axis of the trailer with respect to the axis of the tractor is linked with the bedplate (12).

5. Device according to claim 4 in which the trailer has a self-steered axle (14') characterized in that the member (19') for detecting the position of the trailer axis with respect to the tractor axis is linked with self-steered axle (14').

6. Device according to claim 1, in which the articulated vehicle is of the lorry and trailer type having a tractor (20) and a mailer (21) with at least one articulated axle (24) integral with a pivoting tow bar (22) coupled to the tractor, characterized in that it comprses a detector member (32) for detecting the position of the trailer axis with respect to the tractor axis arranged so as to determine the angle of the tow bar axis with respect to the tractor axis and a detector member (33) for determining the angle of the tow bar axis with respect to the trailer axis.

7. Device according to claim 6, characterized in that the detector member (32) for detecting the position of the trailer axis with respect to the tractor axis is linked with the tow bar (22) and in that the detector member (33) for determining the angle of the tow bar axis with respect to the trailer axis is linked with the articulated axle (34) of the trailer.

8. Device according to claim 1, characterized in that it comprises a hydraulic circuit for acting on the driving wheels (13, 23, 46) of the tractor in response to the control signal transmitted by the electronic circuit.

9. Device according to claim 8, characterized in that the hydraulic circuit has electromagnetic valves (94, 95, 96) controlled by the electronic circuit, said valves supplying hydraulic fluid in one or other direction, in accordance with a signal received from the electronic circuit, to a hydraulic member (100) for actuating the tractor driving wheels.

FIG. 1

FIG. 2

FIG. 3

FIG. 4A

FIG. 4C

FIG. 4B

FIG. 5A

FIG. 5B

FIG. 5C

FIG. 5D

EP 0 168 411 B1

## FIG. 6

## FIG. 7

5

FIG. 8

FIG. 9